(19) Europäisches Patentamt / European Patent Office / Office européen des brevets

(11) **EP 2 568 263 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(51) Int Cl.:
**G01F 1/66** (2006.01)   **G01F 15/14** (2006.01)

(21) Anmeldenummer: **11007410.1**

(22) Anmeldetag: **12.09.2011**

(54) **Portables Ultraschallduchflussmesssystem**

Portable ultrasound flow measurement system

Système de mesure du débit à ultrasons portable

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.03.2013 Patentblatt 2013/11**

(73) Patentinhaber: **Hydrosonic b.v.**
**5466 AZ Veghel (NL)**

(72) Erfinder:
• **Rath, Eric**
**5464 PK Veghel (NL)**

• **Seybold, Walter**
**2512 Traiskirchen-Oeynhausen (AT)**

(74) Vertreter: **Heim, Florian Andreas et al**
**Weber & Heim**
**Patentanwälte**
**Partnerschaftsgesellschaft mbB**
**Irmgardstraße 3**
**81479 München (DE)**

(56) Entgegenhaltungen:
**EP-A1- 1 413 858      WO-A1-2009/071960**
**WO-A2-2005/038410    DE-A1- 10 147 175**
**DE-A1-102006 036 720   JP-A- S60 259 913**
**US-A1- 2008 236 297**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 568 263 B1

**Beschreibung**

Die Erfindung betrifft ein portables Ultraschalldurchflussmesssystem nach dem Oberbegriff des Anspruchs 1.

Zum Bestimmen des Durchflusses durch ein Rohr sind verschiedene Messverfahren bekannt. Die Erfindung betrifft die Ermittlung des Durchflusses mittels Ultraschall. Derartige Messsysteme werden auch als Ultraschalldurchflussmesssysteme bezeichnet. Zum Bestimmen des Durchflusses mittels Ultraschall sind zwei Verfahren gängig, das Ultraschalldopplerverfahren, welches den Dopplereffekt ausnutzt, und das Ultraschalllaufzeitverfahren, welches Unterschiede in Laufzeiten von ausgesendeten Signalen ermittelt und anhand dieser die Geschwindigkeit eines durch ein Messrohr fließenden Fluids oder Mediums bestimmt. Die Erfindung betrifft im Wessentlichen Ultraschalldurchflussmesssysteme, welche nach dem Ultraschalllaufzeitverfahren arbeiten.

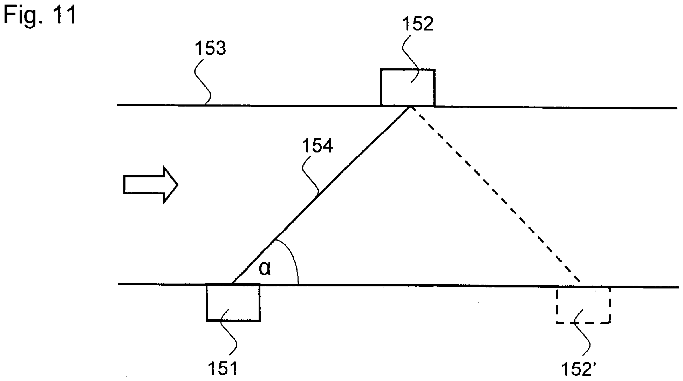

Das Prinzip des Ultraschalllaufzeitverfahrens wird im Folgenden mit Bezug auf Fig. 11 näher erläutert. Zum Durchführen dieses Messverfahrens werden grundsätzlich mindestens zwei Ultraschalltransceiver 151, 152, die zum Aussenden und Empfangen von Ultraschallwellen verwendet werden, benötigt. Die beiden Ultraschalltransceiver 151 und 152 werden an einem Messrohr 153 derart befestigt, dass ein Transceiver 151 etwas weiter stromabwärts angeordnet ist als der andere. Anschließend werden vom ersten Ultraschalltransceiver 151 Ultraschallsignale zum zweiten Ultraschalltransceiver 152 ausgesendet und eine Laufzeit $T_1$ festgestellt. In ähnlicher Weise werden vom zweiten Ultraschalltransceiver 152 Ultraschallsignale zum ersten Ultraschalltransceiver 151 ausgesendet und wiederum eine Laufzeit $T_2$ des Ultraschallsignals festgestellt. Es ist erforderlich, dass die beiden Ultraschalltransceiver 151 und 152 entsprechend aufeinander ausgerichtet sind.

Der Weg des Schalls zwischen den beiden Ultraschalltransceivern 151 und 152 wird als Signalpfad 154 bezeichnet. Eine exakte Ausrichtung der beiden Ultraschalltransceiver 151 und 152 zueinander bzw. aufeinander ist wichtig, da anderenfalls die ausgesendeten Signale nicht empfangen werden können. Außerdem kann es auch dazu kommen, dass nicht das direkte Signal empfangen wird sondern ein an der Wand des Messrohres reflektiertes Signal. Dies würde die Messung verfälschen.

In Fig. 11 ist die Strömungsrichtung des Fluides, welches durch das Messrohr strömt durch einen Pfeil verdeutlicht. Wenn nun Ultraschallsignale von dem Transceiver 151 zum Transceiver 152 ausgesendet werden, so laufen die Ultraschallsignale mit der Strömungsrichtung. Die Ultraschallsignale, welche vom Transceiver 152 zum Transceiver 151 ausgesendet werden, laufen entgegen der Strömungsrichtung. Aufgrund der Strömungsrichtung besteht ein Zeitunterschied zwischen der Laufzeit der Ultraschallwellen in Strömungsrichtung $T_1$ und gegen Strömungsrichtung $T_2$. Dieser Unterschied in den Laufzeiten ist abhängig von der Strömunggeschwindigkeit. Daher kann mittels der Gleichung

$$v = \frac{(T_2 - T_1)}{T_1 T_2} \cdot \frac{L}{2\cos(\alpha)}$$

die Fließgeschwindigkeit des Mediums ermittelt werden. In der Gleichung bezeichnet v die Fließgeschwindigkeit des Mediums, $T_1$ die Laufzeit des Ultraschallsignals in Strömungsrichtung, $T_2$ die Laufzeit des Ultraschallsignals gegen die Strömungsrichtung, L die Länge des Ultraschallsignalpfades und $\alpha$ den Winkel des Ultraschallsignals zur Strömung.

Mittels der so bestimmten Fließgeschwindigkeit des Mediums in dem Messrohr kann zusammen mit dem Durchmesser bzw. der Querschnittsfläche des Messrohres das Durchflussvolumen bestimmt werden.

Neben dem direkten Schallpfad, wie er in Fig. 11 durch die durchgezogene Linie verdeutlicht ist, ist es auch möglich einen an der Messrohrwandung gespiegelten Signalpfad zu verwenden. Dieser ist in Fig. 11 durch den gestrichelten Signalpfad ergänzt. In diesem Fall würde der Transceiver 152 nicht eingesetzt werden, sondern ein Transceiver 152' an seiner Stelle. Durch die längere Messstrecke ergeben sich grundsätzlich genauere Messwerte.

Jedoch ist es aufgrund der notwendigen Variablen für die Berechnung der Fließgeschwindigkeit, wie dem Winkel $\alpha$ und der Länge L des Ultraschallsignalpfades, wichtig, die Geometrie der Messanordnung mit einer hohen Genauigkeit zu erkennen. Auch sollte die Anzahl der Reflektionen bekannt sein, da anderenfalls die Länge des Ultraschallpfades falsch eingeschätzt würde.

Es sind grundsätzlich zwei verschiedene Arten von Ultraschalldurchflussmesssystemen, welche nach dem Laufzeitmesssystem arbeiten, bekannt. Hierbei sind zum Einen fest eingebaute Systeme zu nennen. Bei diesen befinden sich die Ultraschalltransceiver fest an oder in dem Messrohr. Dies ermöglicht eine hohe Genauigkeit der geometrischen Anordnung der Transceiver. Nachteilig an diesem System ist jedoch, dass die Sensoren grundsätzlich im oder am Rohr verbleiben müssen und somit ein hoher Investitionsaufwand erforderlich ist. Derartige Systeme werden meist nur dann eingesetzt, wenn eine im Wesentlichen kontinuierliche Überwachung des Durchflusses notwendig ist.

Demgegenüber sind zum Anderen so genannte Clamp-On-Durchflussmesser bekannt, bei denen Ultraschallsensorköpfe eines Ultraschalldurchflussmesssystems von außen an ein Messrohr angebracht werden. Dieses Messsystem kann nach durchgeführter Messung abgebaut werden und an einer anderen Messstelle neu aufgebaut werden. Nachteilig ist jedoch, dass durch die hohen Anforderungen an die Genauigkeit der geometrischen Ausrichtung und die Übertragung der Ultraschallsignale ein aufwändiger Installations- und Justierungsprozess erforderlich ist. Auch haben die mit Clamp-On-Geräte ermittelten Daten eine weitaus höhere Ungenauigkeit als Daten von fest eingebauten Systemen.

Eine Weiterbildung der Messsysteme mit fest eingebauten Sensoren ist aus der DE 10 2008 033 701 A1 bekannt. Hierbei wird ein spezielles Messrohr vorgesehen, an dem ein Ultraschallmessgerät mechanisch fixiert werden kann. Das dort beschriebene System wird insbesondere in Bereichen, in denen eine kontinuierliche Messung erforderlich ist, eingesetzt. Vorteile dieses Systems sind, dass zur Kalibrierung des Messsystems nicht wie bei fest eingebauten Messsensoren das komplette Rohrstück entfernt werden muss, sondern lediglich das Ultraschallmessgerät entfernt werden kann. Um jedoch sicher zu gehen, dass jeweils nur ein bestimmtes Ultraschallgerät an ein bestimmtes Messrohr angesetzt werden kann und somit die Kalibrierung für das Rohr gegeben ist, sind zusätzliche mechanische Identifikationselemente vorgesehen.

In der EP 1 413 858 A1 ist ein Ultraschalldurchflussmesser mit einem Ultraschallwandler beschrieben, der an der Außenwand eines Messrohrs befestigt ist und durch ein Gehäuse geschützt oder mittels Umspritzen mit Kunststoff abgekapselt ist.

Aus der JP S60 259913 A ist zudem ein Ultraschalldurchflussmesssystem mit zwei Sensorköpfen bekannt, wobei die beiden Sensorköpfe an zusätzlichen Rohrsegmenten festgeklemmt sind, die schräg an einem Messrohr vorgesehen sind.

Es ergibt sich jedoch der Nachteil, dass das Ultraschallmessgerät nur an dem Messrohr eingesetzt werden kann und die flexible Verwendung ähnlich wie bei Clamp-On-Messgeräten nicht möglich ist.

In US 2008/0236297 A1 ist ein Ultraschallmessgerät zur Untersuchung von Blutgefäßen beschrieben. Das Ultraschallgerät weist einen Messkopf mit Ultraschalltransceivern auf, die durch einen zentralen offenen Bereich des Messkopfes eine Messstrecke bilden. An dieser Stelle wird das zu untersuchende Blutgefäß positioniert, welches über eine innere Hülle, die an einer Innenseite des Messkopfes befestigt ist, fixiert wird.

Gegenstand von WO 2009/071960 A1 ist eine Vorrichtung zur Bestimmung der Flussgeschwindigkeit in einem Rohr mittels Ultraschall. Dabei wird ein Ultraschallsender am Messrohr gegenüberliegend zu zwei Ultraschallempfängern angeordnet. Der Sender strahlt entweder weitwinklig ab oder umfasst zwei schräg angeordnete Transmitter, um Ultraschallwellen in Richtung der beiden Empfänger abzugeben.

DE 10 2006 036 720 A1 beschreibt ein Rohr mit einem Informationsträger, welcher Informationen erfassen und speichern kann.

Der Erfindung liegt die **Aufgabe** zugrunde, ein portables flexibel einsetzbares Ultraschalldurchflussmesssystem mit einer Messvorrichtung und einem Messrohr zu schaffen, welches eine hohe Genauigkeit bei einfacher Handhabung ermöglicht.

Die Aufgabe wird erfindungsgemäß durch ein portables Ultraschalldurchflussmesssystem mit den Merkmalen des Anspruchs 1 gelöst.

Weitere vorteilhafte Ausführungen sind in den abhängigen Ansprüchen, der Beschreibung sowie den Figuren und deren Beschreibung angegeben.

Gemäß Anspruch 1 ist vorgesehen, dass jeder Ultraschalltransceiver im Sensorkopf im Wesentlichen parallel zur Sensorfläche im Sensorgehäuse angeordnet ist.

Ein Grundgedanke der Erfindung liegt darin, dass erkannt wurde, dass von einer schrägen Anordnung der Ultraschalltransceiver im Sensorkopf abgewichen werden kann, um zu einem größeren Anwendungsfeld zu gelangen. Herkömmlicherweise sind die Ultraschalltransceiver zur Sensorfläche im Sensorkopf geneigt vorgesehen.

Dies erfolgt, um den Ultraschall schräg in das Messrohr und das damit verbundene Medium einstrahlen zu können. Hierdurch wird bereits der Signalweg vorgegeben. Jedoch ergibt sich durch die schräge Anordnung der Ultraschalltransceiver zu der Sensorfläche im Sensorkopf der Nachteil, dass der Verwendungsbereich dadurch eingeschränkt ist, da der Signalpfad bereits mehr oder weniger fest vorgegeben ist. Hierdurch ist eine flexible Verwendung der Sensorköpfe mit verschiedenen Messrohren nur schwer oder mit hohem Aufwand möglich. Durch das erfindungsgemäße Anordnen der Ultraschalltransceiver im Sensorkopf im Wesentlichen parallel zur Sensorfläche im Sensorgehäuse ist es möglich, den Einstrahlwinkel des Ultraschalls beliebig einzustellen. Dies kann beispielsweise durch entsprechende Unterlegkeile oder dergleichen erfolgen.

Grundsätzlich ist anzumerken, dass, wenn im Rahmen der Erfindung von Einstrahlwinkel und Aussenden von Ultraschall die Rede ist, auch das Empfangen bzw. der Empfangswinkel von Ultraschall hierunter verstanden werden kann.

Die Sensorköpfe sind beweglich zueinander ausgebildet. Hierdurch können hohe Freiheitsgrade in der Verwendung mit verschiedenen Messrohren erreicht werden, da durch die Beweglichkeit der Sensorköpfe keine oder kaum Einschränkungen bezüglich des Positionierens der Sensorköpfe bestehen. Hierbei können die Sensorköpfe beispielsweise über Kabel mit einer Haupteinheit, in der sich die Steuer- und Auswerteeinrichtung befindet, verbunden sein.

Es ist jedoch auch möglich, einen Grundkörper vorzusehen und die Sensorköpfe an diesem, insbesondere flexibel, zu befestigen. Hierbei kann der Grundkörper beliebig ausgeführt sein, wobei sich die Sensorköpfe bevorzugt an den Endstellen des Grundkörpers befinden, so dass diese einen möglichst großen Abstand voneinander haben und so gut an verschieden große Messrohre ansetzbar sind.

Die Form des Grundkörpers kann grundsätzlich beliebig sein. Vorteilhaft ist jedoch, wenn er scheren-, zangen-, zwingen- oder schraubzwingenartig ausgebildet ist und wenn an zwei seiner Endbereiche jeweils ein Sensorkopf vorgesehen ist. Durch eine scheren- oder zangenartige Ausbildung ist es einfach, die Sensorköpfe sicher an einem Rohr mit einem beliebigen Durchmesser anzubringen. Bei einer scheren- oder zangenartigen Ausführung des Grundkörpers können auch weitere Informationen wie der Abstand der Sensorköpfe zueinander mittels Sensoren im Grundkörper ermittelt werden. Ähnliche Vorteile ergeben sich bei einer zwingen- oder schraubzwingenartigen Anbringung. Hierdurch wird insbesondere sichergestellt, dass die Sensorköpfe einen ausreichend guten Kontakt zu dem Messrohr aufweisen.

In einer Weiterbildung des Grundkörpers können die Sensorköpfe schwenkbar an diesem gelagert sein. Hierdurch wird erreicht, dass unabhängig von der exakten Ausführung des Messrohres, insbesondere der Ausführung der Anlegeeinrichtungen, die Sensorköpfe im Wesentlichen senkrecht zu den Anlegeeinrichtungen angebracht werden können. Somit ergibt sich ein gutes Ein- und Auskoppelverhalten des Ultraschalls ohne oder zumindest mit verringerten Störsignalen.

Zusätzlich oder alternativ ist es möglich, den Grundkörper und die daran befestigten Sensorköpfe mit einem festen Abstand vorzusehen. Hierbei können die Sensorköpfe lediglich schwenkbar am Grundkörper angebracht sein, so dass ein gutes Aufsetzen auf ein Messrohr möglich ist.

Vorteilhaft ist es jedoch, wenn der Abstand der Sensorköpfe zueinander veränderbar ist. Hierbei kann es zusätzlich auch vorgesehen sein, dass der Grundkörper Mittel zum Ermitteln des Abstandes der Sensorköpfe zueinander aufweist. Dies ist aber nicht zwingend erforderlich. Dadurch, dass der Abstand der Sensorköpfe zueinander variiert werden kann, kann die Messvorrichtung mit Messrohren verschiedenen Durchmessers und mit verschiedenen Signallaufwegen, beispielsweise I-, V-, N- oder W-förmig verwendet werden. Hierdurch ergibt sich ein größerer Anwendungsbereich als bei einer Messvorrichtung, die einen festen Abstand der Sensorköpfe zueinander aufweist.

Der Grundkörper kann eine Arretiereinrichtung zum Feststellen des Abstandes der Sensorköpfe zueinander aufweisen. Dies bietet den Vorteil, dass, wenn eine Vorrichtung mit Sensorköpfen verwendet wird, deren Abstand zueinander variiert beziehungsweise veränderbar ist, und diese auf ein Messrohr angesetzt wird, durch die Arretierung der Abstand fest eingestellt wird, so dass die Sensorköpfe während der Messung nicht oder nur schwer vom Messrohr entfernt werden können.

Bei der erfindungsgemäßen Messvorrichtung ist eine Ausleseeinrichtung zum automatischen oder zumindest semiautomatischen Auslesen eines Informationsträgers, welcher an einem Messrohr befestigt ist, vorgesehen. Hierbei zieht die Steuer- und Auswerteeinrichtung zum Ermitteln der Flussgeschwindigkeit des durch das Messrohr strömenden Mediums zumindest einen Teil der ausgelesenen Informationen heran. Auf dem Informationsträger können verschiedene Informationen zum Messrohr und/oder der geometrischen Anordnung beispielsweise Informationen zu dem Rohrmaterial, der Positionierung der Anlageeinrichtungen des Messrohres zueinander, dem Winkel der Anlegeeinrichtungen zur Mittelachse des Messrohres, welches dem Winkel $\alpha$ der Einleitung entspricht, der Temperatur des Messrohres, der Seriennummer des Messrohres und/oder dem definierten Signalpfad vorgesehen sein.

Wird von der Steuer- und Auswerteeinrichtung zumindest eine oder mehrere dieser Informationen zur Berechnung der Flussgeschwindigkeit herangezogen, so ergibt sich ein genaueres Ergebnis bei der ermittelten Flussgeschwindigkeit. Beispielsweise ist es möglich, den Informationsträger als einen RFID-Tag auszuführen. Die Ausleseeinrichtung ist in diesem Fall als ein RFID-Leser ausgeführt, der die Informationen des Informationsträgers ausliest. Es ist aber auch möglich lediglich eine Seriennummer auf dem Informationsträger vorzusehen. In diesem Fall ist in der Steuer- und Auswerteeinrichtung eine Datenbank vorhanden, mit der anhand der ermittelten Seriennummer zumindest ein Teil der für die Ermittlung der Flussgeschwindigkeit notwendigen Informationen erhalten werden kann. Auch ist es denkbar, dass die Messvorrichtung über einen mobilen Datennetzzugang zu einem LAN oder dem Internet eine externe Datenbank abfragt.

Sind im Bereich der Sensorflächen Positioniereinrichtungen ausgebildet, welche komplementär zu an einem Messrohr ausgebildeten Positionierungshilfen ausgeformt sind und mit diesen zusammen einen sicheren Sitz der Sensorköpfe ermöglichen, so kann eine höhere Positionierungsgenauigkeit der Sensorköpfe auf einem Messrohr erreicht werden. Hierzu können Schwalbenschwanznute, Zentrierbohrungen oder -senkungen, Gewindebohrungen oder Magnete sowie jede geeignete andere form- und/oder kraftschlüssige Verbindungseinrichtung vorgesehen sein.

Das erfindungsgemäße Messrohr ist unter anderem dadurch gekennzeichnet, dass zwei Anlegeeinrichtungen zum Definieren von jeweils einer Anlegeposition für einen Sensorkopf einer Messeinrichtung vorgesehen sind, und dass ein Informationsträger mit Informationen zu dem Messrohr und/oder den definierten Anlegepositionen auf oder an dem Messrohr angebracht ist.

Der Erfindung liegt die Erkenntnis zugrunde, dass bei herkömmlichen Clamp-On-Messsystemen, welche mit beliebigen Messrohren verwendet werden können, es äußerst aufwändig ist, eine genaue Messung durchzuführen. Um bei diesen Systemen verlässliche Messwerte zu erreichen, ist es notwendig, sie exakt und zeitaufwändig zu justieren. Entsprechend der Erfindung kann diese zeitaufwändige Justierung entfallen, da zwei Anlegeeinrichtungen zum Definieren von jeweils einer Anlegeposition für einen Sensorkopf einer entsprechenden Messvorrichtung vorgesehen sind. Durch diese Anlegeeinrichtungen werden die exakten Positionen der beiden Sensorköpfe auf dem Messrohr definiert. Somit ist es nicht mehr erforderlich, die Positionen der Sensorköpfe experimentell zu bestimmen wie bei bekannten Clamp-On-Systemen. So wird durch die Position der Anlegeeinrichtungen bereits ein Signalpfad definiert, der beispielsweise I- oder V-förmig ist. Damit die entsprechende Messvorrichtung diese Informationen erhalten kann, beispielsweise um welchen Signalpfad es sich handelt, ist ein Informationsträger auf dem Messrohr vorgesehen. Dieser liefert für die Messvorrichtung Informationen zu dem Messrohr und/oder den definierten Anlagepositionen. Hierdurch kann die Messvorrichtung diese Informationen verwenden, um ein genaueres Ergebnis für die Durchflussmessung zu ermitteln.

Vorteilhaft ist es, wenn die Anlegeeinrichtungen jeweils eine im Wesentlichen ebene Fläche auf dem Rohrmantel des Messrohres aufweisen und die ebene Fläche jeweils bezüglich der Mittelachse des Messrohres geneigt ausgelegt ist, wobei die beiden ebenen Flächen der beiden Anlegeeinrichtungen ein Signalpfad für ein Ultraschallsignal definieren. Der Signalpfad kann beispielsweise als I-, V-, N- oder W-förmiger Signalpfad ausgebildet sein. Durch die Neigung der ebenen Flächen zur Mittelachse des Messrohres können Sensorköpfe verwendet werden, die Ultraschalltransceiver aufweisen, die senkrecht zum Ende des Sensorkopfes ausstrahlen. Somit wird durch die Neigung der Flächen zur Mittelachse der entsprechende Einstrahlwinkel in das Rohr definiert. Dies hat zur Folge, dass die meisten wesentlichen Informationen und/oder Parameter durch die Anlegeeinrichtung und das Rohr definiert werden. Somit ist durch das Rohr beziehungsweise den Informationsträger bekannt, unter welchem Einstrahlwinkel der Ultraschall eingestrahlt wird und welcher Signalpfad ausgebildet ist. Hierdurch kann eine genaue Messung erfolgen, ohne dass eine vorherige langwierige Kalibrierung beziehungsweise Justage der Messsensoren notwendig ist, da hier ideale Messbedingungen mit einem bekannten zuvor definierten Signalpfad, von dem alle wesentlichen Parameter bekannt sind, vorliegen.

In einer Weiterbildung des erfindungsgemäßen Messrohres ist der Informationsträger als RFID-Tag und/oder elektronischer Speicherbaustein ausgeführt, wobei der Informationsträger beispielsweise Informationen zu dem Rohrmaterial, der Positionierung der Anlegeeinrichtungen zueinander, dem Winkel der Anlegeeinrichtungen zu der Mittelachse des Messrohres, der Temperatur des Messrohres, der Seriennummer des Messrohres und/oder dem definierten Signalpfad aufweist. Mithilfe dieser Informationen kann eine Messvorrichtung, welche den Informationsträger ausliest, die Genauigkeit der ermittelten Ergebnisse erhöhen beziehungsweise eine zuverlässige Messung durchführen.

Wird beispielsweise ein RFID-Tag als Informationsträger verwendet, so kann mittels des RFID-Tags auch die Temperatur des Messrohres bestimmt werden und von der Messvorrichtung ausgelesen werden. Somit können bereits kleine temperaturbedingte Abweichungen bei der Ermittlung des Ergebnisses berücksichtigt werden. Es ist aber auch möglich, eine andere drahtlose oder leitungsgebundene Informationsübertragung von dem Informationsträger des Rohres zu der Messvorrichtung vorzusehen. Ebenso kann eine elektrische direkte Übertragung oder eine kapazitive Übertragung verwendet werden. Hierbei ist es auch möglich, dass auf dem Informationsträger lediglich eine Seriennummer oder eine Kennzeichnung, wie eine Modellangabe, codiert ist. Mithilfe der Seriennummer kann die Messvorrichtung unter Zuhilfenahme einer Datenbank die notwendigen Informationen zur Berechnung der Durchflussgeschwindigkeit und des Durchflusses ermitteln.

Im Bereich der Anlegeeinrichtung können Positionierhilfen zum Ausbilden eines sicheren Sitzes von Sensorköpfen auf den Anlegeeinrichtungen, insbesondere zum Ausbilden einer temporären kraft- und/oder formschlüssigen Verbindung vorgesehen sein. Diese Positionierhilfen sind bevorzugt komplementär zu entsprechend ausgebildeten Positioniereinrichtungen auf den Sensorköpfen ausgebildet. Sie können beispielsweise eine kegelförmige Vertiefung haben, wobei die Sensorköpfe einen entsprechenden kegelförmigen Vorsprung aufweisen. Es sind aber auch andere Positionierhilfen, beispielsweise Schwalbenschwanznuten, Zentrierbohrungen oder -senkungen, Gewindebohrungen oder Magnete sowie entsprechende Aussparungen mit Führungen möglich. Ziel der Positionierhilfe ist es, einen sicheren Sitz des Sensorkopfes auf den Anlegeeinrichtungen zu erreichen, so dass die Informationen, welche der Informationsträger enthält, mit der Realität übereinstimmen.

Grundsätzlich reicht ein einfaches Auflegen eines Sensorkopfes auf die Anlegeeinrichtung aus, um ein Ultraschallsignal in das Messrohr einzukoppeln. Erfindungsgemäß ist, wenn im Bereich der Anlegeeinrichtung Kopplungselemente vorgesehen sind, die ein gutes Ein- und Auskoppeln von Ultraschallsignalen in oder aus dem Messrohr ermöglichen. Sie können beispielsweise in Form von Koppelpads oder Beschichtungen ausgeführt sein, wodurch ein Einkoppeln des Schalls in die Flüssigkeit beziehungsweise ein Auskoppeln des Schalls verbessert wird. Hierbei ist es bevorzugt, wenn mithilfe der Kopplungselemente die Unterschiede zwischen der Schallleitfähigkeit beim Transceiver und dem Messrohr kontinuierlich angeglichen werden, so dass ungewollte Reflexionen vermindert werden können.

Das erfindungsgemäße Messrohr kann zusammen mit einer erfindungsgemäßen Messvorrichtung als portables Ultraschalldurchflussmesssystem verwendet werden.

Hierbei kann es beispielsweise vorgesehen sein, das erfindungsgemäße Messrohr an Einrichtungen einzubauen, die eine temporäre Überprüfung des Durchflusses aber keine dauerhafte Überprüfung benötigen. Ist eine derartige Überprüfung notwendig, so kann mit einer erfindungsgemäßen Messvorrichtung relativ einfach und genau der Durchfluss bestimmt werden. Vorteilhaft ist hierbei, dass an verschiedenen Einrichtungen, die jeweils ein Messrohr eingebaut haben, mit derselben Messvorrichtung der Durchfluss ermittelt werden kann, so dass beispielsweise in einem Betrieb, der mehrere dieser Einrichtungen aufweist, die eine temporäre Messung des Durchflusses benötigen, nur eine Messvorrichtung angeschafft werden muss. Zum Durchführen der Messung müssen dann lediglich die Sensorköpfe einer erfindungsgemäßen Messvorrichtung auf ein Messrohr befestigt, beispielsweise geklemmt werden, um eine Ultraschalldurchflussmessung durchzuführen und somit den Durchfluss zu bestimmen.

Des Weiteren ermöglicht das Zusammenspiel zwischen dem erfindungsgemäßen Messrohr und der erfindungsgemäßen Messvorrichtung eine sehr exakte Messung des Durchflusses, welche mit herkömmlichen Clamp-On-Messsystemen nicht oder nur schwer möglich ist. So ergeben sich Möglichkeiten zur Verwendung, bei der herkömmliche Clamp-On-Systeme nicht eingesetzt werden können. Beispielsweise muss regelmäßig bei Hydraulikanlagen bei Baggern die Leistungsfähigkeit einer vorhandenen Hydraulikanlage durch Bestimmung des hydraulischen Volumenstromes überprüft werden.

So ist es zum Durchführen dieser Messung mit bekannten hochgenauen Messgeräten notwendig, die Hydraulik abzuschalten, die Leitungen der Hydraulik zu trennen und die Flüssigkeiten in den Leitungen sicher aufzufangen. Dann kann ein hochgenauer Flüssigkeitssensor installiert werden, die Hydraulik wieder eingeschaltet werden, und das Hydrauliksystem entlüftet werden. Anschließend wird die Messung durchgeführt. Nach Beendigung der Messung werden die Leitungen wieder geöffnet, die Flüssigkeiten sicher aufgefangen, das Durchflussrohr mit dem Durchflusssensor entnommen und die Rohrleitungen wieder verbunden. Anschließend muss die Hydraulik wieder eingeschaltet werden und das System abschließend entlüftet werden.

Unter Verwendung des erfindungsgemäßen portablen Ultraschallmesssystems kann dies vereinfacht werden. Werkseitig wird bei Herstellung der Hydraulikanlage bereits ein erfindungsgemäßes Messrohr eingebaut. Dann ist es möglich, lediglich die erfindungsgemäße Messvorrichtung auf das erfindungsgemäße Messrohr anzusetzen, die Messung durchzuführen und anschließend die Messvorrichtung wieder abzunehmen. Somit beschleunigt sich die Messung des hydraulischen Volumenstroms erheblich.

Zusammenfassend kann durch die Verwendung des erfindungsgemäßen portablen Ultraschalldurchflussmesssystems eine derartige Messung durchgeführt werden, ohne Auftreten des Risikos, dass beispielsweise durch Austreten des Hydrauliköls der Boden verschmutzt wird. Auch müssen bei dem erfindungsgemäßen System keine Daten in den Sensor eingegeben werden, denn die Geometrie des Messrohres und die weiteren Parameter können durch den Informationsträger automatisch von der Messvorrichtung ausgelesen werden.

Zusätzlich zu der Bestimmung des Durchflussvolumens können die ausgesendeten und empfangenen Ultraschallsignale auch verwendet werden, um Blasen in dem Fluid zu detektieren und/oder eine Konzentrations- und/oder Dichtebestimmung des Fluides durchzuführen. Ebenfalls ist es möglich, zusätzlich zum Laufzeitmessverfahren eine Messung der Durchflussgeschwindigkeit mittels des Dopplerverfahrens durchzuführen und die ermittelten Werte zu vergleichen, um eine Verifikation der Werte zu ermöglichen. Hierdurch werden Fehlmessungen, die falsche Ergebnisse liefern, beispielsweise aufgrund eines Sensordefektes, leicht erkannt.

Die Erfindung wird nachfolgend anhand von Ausführungsbeispielen und schematischen Zeichnungen näher erläutert. In diesen Zeichnungen zeigen:

Fig. 1:             ein erfindungsgemäßes Messrohr mit einem I-förmigen Signalpfad;

Fig. 2:             ein erfindungsgemäßes Messrohr mit einem V-förmigen Signalpfad;

Figuren 3a und 3b:   eine erste Ausführungsform einer erfindungsgemäßen Messvorrichtung an einem Messrohr nach Fig. 1;

Figuren 4a und 4b:   eine erste Ausführungsform einer erfindungsgemäßen Messvorrichtung an einem Messrohr nach Fig. 2;

Figuren 5a und 5b:   eine zweite Ausführungsform einer erfindungsgemäßen Messvorrichtung an einem Messrohr nach Fig. 1;

Figuren 6a und 6b:   eine zweite Ausführungsform einer erfindungsgemäßen Messvorrichtung an einem Messrohr nach Fig. 2;

Figuren 7a und 7b:   eine dritte Ausführungsform einer erfindungsgemäßen Messvorrichtung an einem Messrohr nach Fig. 1;

Figuren 8a und 8b:   eine dritte Ausführungsform einer erfindungsgemäßen Messvorrichtung an einem Messrohr nach Fig. 2;

Figuren 9a und 9b:      eine vierte Ausführungsform einer erfindungsgemäßen Messvorrichtung an einem Messrohr nach Fig. 1;

Figuren 10a und 10b:     eine vierte Ausführungsform einer erfindungsgemäßen Messvorrichtung an einem Messrohr nach Fig. 2, und

Fig. 11:           eine Skizze zur Verdeutlichung des Laufzeitdifferenzmessverfahrens.

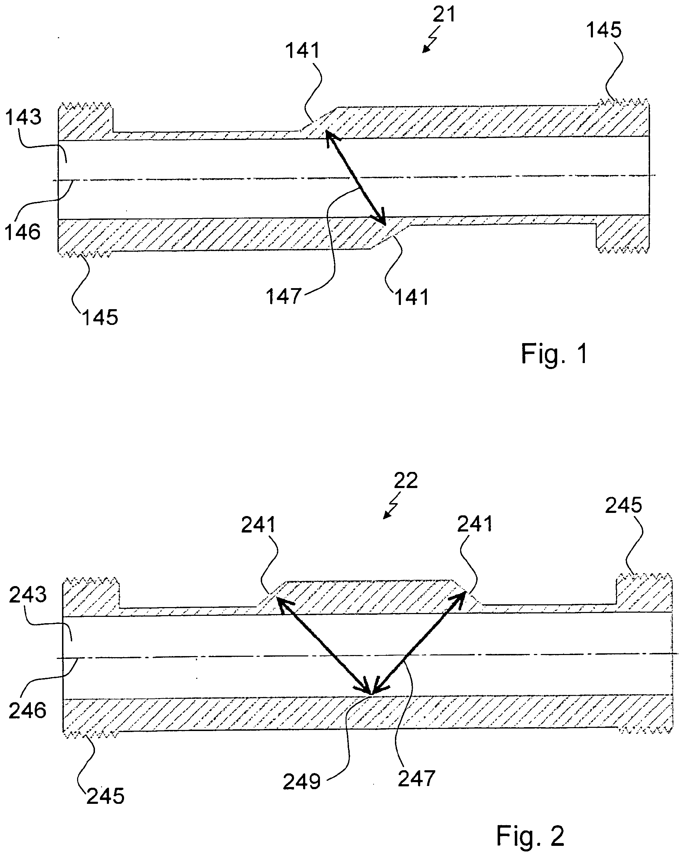

In Fig. 1 ist eine erste Ausführung eines erfindungsgemäßen Messrohres 21 mit Iförmigem Signalpfad 147 dargestellt. In dieser Ausführungsform sind an einem geraden Rohrelement 143 zwei gegenüberliegende Anlegeeinrichtungen 141 vorgesehen. Diese weisen eine Neigung zu einer Mittelachse 146 des Messrohres 21 auf. Das Messrohr 21 kann mittels der Rohrverbindungselemente beziehungsweise Gewinde 145 an beiden Enden an andere Rohrelemente angeflanscht werden.

Die beiden Anlegeeinrichtungen 141 definieren die Positionen, an der Sensorköpfe einer Messvorrichtung angelegt werden können. Durch die erfindungsgemäße Konstruktion der Sensorköpfe in der Art, dass die Ultraschalltransceiver parallel zu der Sensorfläche im Sensorkopf vorgesehen sind, kann durch die schräge Neigung der Anlageeinrichtungen 141 zur Mittelachse 146 des Messrohres 21 ein Signalpfad 147 definiert werden.

Die Anlageeinrichtungen 141 können durch Ausfräsungen im Rohrmantel des Messrohres 21 erzeugt werden. Die Anlageeinrichtungen 141 können beispielsweise als Negativformen der Sensorköpfe ausgeführt sein. Es könnten aber ebenso ebene, runde oder beliebig geformte Flächen ausgebildet werden, an die dann die entsprechenden Sensorköpfe angepasst sind.

Wesentlich hierbei ist, dass durch die Geometrie der Anlageeinrichtungen 141 ein Signalpfad 147 definiert wird. Informationen zu diesem Signalpfad 147, beispielesweise der Winkel des Signalpfades 147 zur Mittelachse 146 des Messrohres 41, sind dann auf einem Informationsträger, der hier nicht dargestellt ist, an dem Rohr 21 vorgesehen. Mit Hilfe dieses Informationsträgers, kann eine Messvorrichtung Informationen zu dem Signalpfad 147 erhalten. Diese Informationen sind notwendig, um die Geschwindigkeit des durch das Messrohres 21 strömenden Mediums zu ermitteln. Mittels der Geschwindigkeit und des Durchmessers des Messrohres kann das Durchflussvolumen des Mediums ermittelt werden. Hierzu ist es auch notwendig, dass die Messvorrichtung den Durchmesser des Messrohres kennt. Dieser kann ebenfalls in dem Informationsträge abgespeichert sein.

In Fig. 2 ist eine weitere Ausführungsform eines Messrohrs 22 dargestellt. Bei diesem Messrohr 22 definieren die beiden Anlageeinrichtungen 241 einen V-förmigen Signalpfad 247. Der Ultraschall, welcher im Bereich einer ersten Anlegeeinrichtung 241 in das Messrohr 22 eingekoppelt wird, wird an der Messrohrwandung reflektiert, so dass er an der Position der zweiten Anlegeeinrichtung 241 wiederum abgenommen bzw. empfangen werden kann. Um diese Reflektion zu verbessern, kann an der entsprechenden Stelle, an der das Ultraschallsignal reflektiert werden soll, ein Ultraschallreflektor 249 vorgesehen sein.

Die Anlageeinrichtungen 241 sind wiederum geneigt zu der Mittelachse 246 des Messrohres 22 ausgeführt. Im Gegensatz zu den Anlageeinrichtungen 141 aus Fig. 1 sind sie diesmal mit einem unterschiedlichen Winkel zur Mittelachse 246 des Messrohres 41 im Mantel des Messrohres 22 vorgesehen.

Das Messrohr 22, welches im Wesentlichen aus einem modifizierten geraden Rohrelement 243 besteht, weist wiederum an seinen Enden Gewinde 245 auf, um es beispielsweise in ein Hydrauliksystem einbauen zu können.

In den beiden dargestellten Figuren 1 und 2 ist jeweils ein I- 147 oder V-förmiger Signalpfad 247 dargestellt. Abhängig von der Anordnung der Anlageeinrichtungen 141, 241, kann aber auch ein N- oder W-förmiger Signalpfad ausgebildet werden.

Grundsätzlich kann das Messrohr 21, 22 eine beliebige Innenkontur aufweisen. Diese ist bevorzugt strömungsgünstig ausgeformt, und kann beispielsweise einen Einlaufkonus aufweisen. Auch sind Ausführungen möglich, um Blasenbildung und dergleichen zu verhindern sowie eine möglichst gleichmäßige Durchströmgeschwindigkeit des Durchflussmediums zu erreichen.

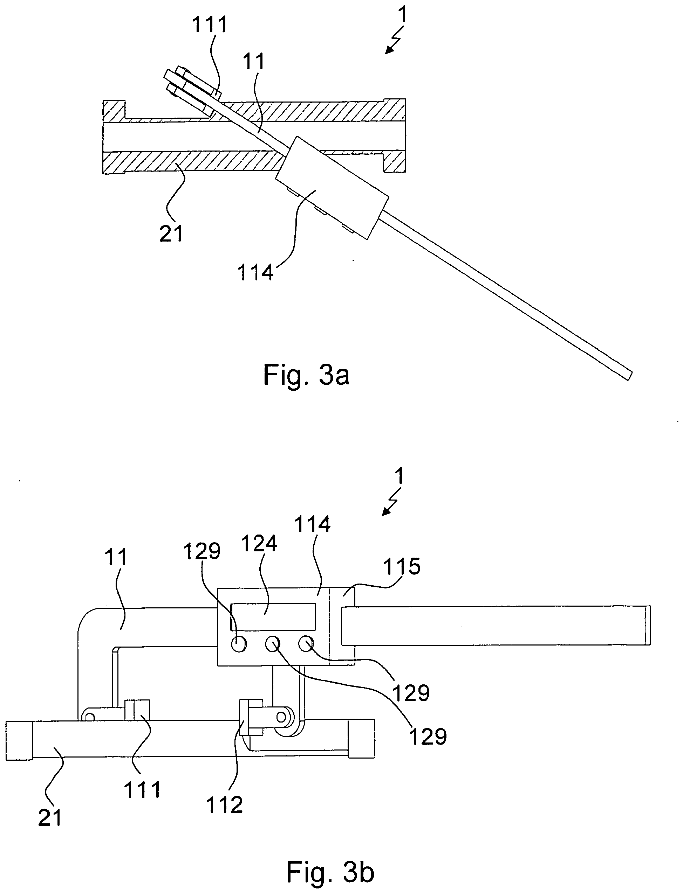

In den Figuren 3a und 3b ist ein Ultraschalldurchflussmesssystem 1 dargestellt. Dieses besteht aus einer Messvorrichtung 11 und einem Messrohr 21, welches dem Messrohr 21 aus Fig. 1 entspricht.

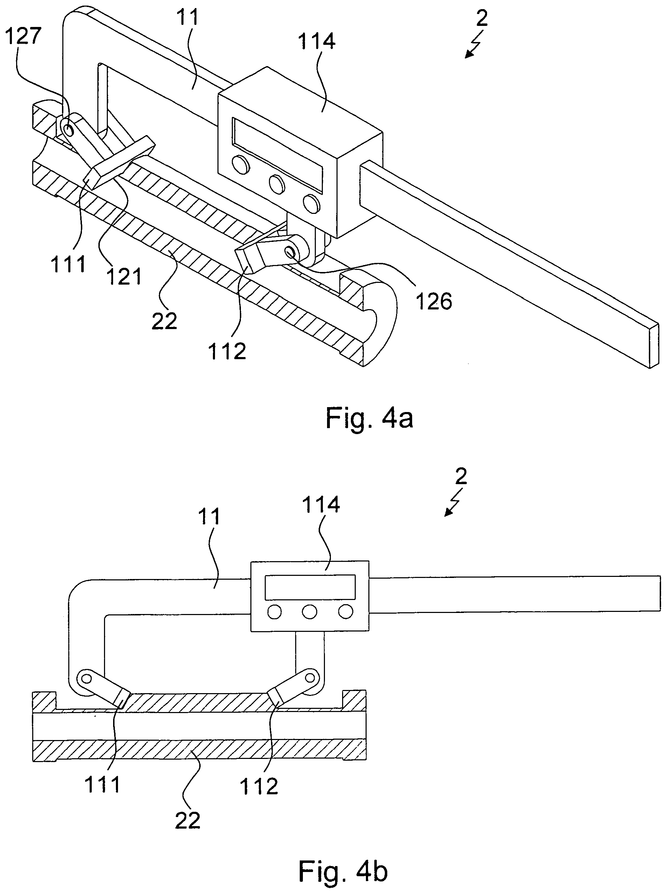

In den Figuren 4a und 4b ist eine weitere Ausführung des erfindungsgemäßen Ultraschalldurchflussmesssystems 2 dargestellt. Hierbei findet dieselbe Messvorrichtung 11 wie bei der Ausführung in den Figuren 3a und 3b Anwendung. In diesem Fall wird die Messvorrichtung 11 zusammen mit einem Messrohr 22, welches dem Messrohr aus Figur 2 entspricht, verwendet.

Die Messvorrichtung 11 weist eine Form ähnlich einer Schieblehre auf, wobei an einem Grundkörper 114 zwei Sensorköpfe 111 und 112 befestigt sind.

Am Grundkörper 114 ist eine Grundeinheit 115 mit einer Anzeigeeinrichtung 124, welche auch als Display bezeichnet werden kann vorgesehen. Dort sind auch entsprechende Bedienelemente in Form von Bedienknöpfen 129 angebracht. Die Grundeinheit 115 des Grundkörpers 114 kann auf einen Arm des Grundkörpers 114 verschoben werden, so dass der Abstand zwischen den beiden Sensorköpfen 111 und 112 verändert werden kann. Dies dient dazu, um die Sensorköpfe 111, 112 exakt an den Anlegeeinrichtungen 141 des Messrohres 21 auszurichten.

Die Messvorrichtung 11 kann den Abstand der Sensorköpfe 111 und 112 zueinander ermitteln. Hierzu kann beispielsweise eine entsprechende Abstandsermittlungseinrichtung in dem Grundkörper 114 vorgesehen sein. Es ist aber auch möglich, dass eine Ausleseeinrichtung den Abstand der Anlegeeinrichtungen 141 des Messrohres 21 zueinander vom Informationsträger ausliest, wodurch auch der Abstand der beiden Sensorköpfe 111, 112 zueinander bekannt ist. Wird die Messvorrichtung 11 in der Art, wie sie in den beiden Figuren 3a und 3b dargestellt ist, an das Messrohr 21 angesetzt, so kann eine Ultraschallmessung durchgeführt, um die Durchflussgeschwindigkeit des Mediums in dem Messrohr 21 zu ermitteln. Zusammen mit der bekannten Geometrie der gesamten Anordnung sowie dem Durchmesser des Messrohres 21 wird anschließend das Durchflussvolumen bestimmt und kann beispielsweise auf dem Display 124 ausgegeben werden.

In den Figuren 4a und 4b wird dieselbe Messvorrichtung 11 verwendet. In diesem Fall wird sie an ein Messrohr 22, welches dem aus der Fig. 2 entspricht, angesetzt. Um die Messvorrichtung 11 sowohl mit einem Messrohr gemäß Fig. 1 wie auch gemäß Fig. 2 verwenden zu können, sind die Sensorköpfe 111 und 112 mittels Gelenken 126, 127 schwenkbar an dem Grundkörper 114 befestigt. Durch die gelenkige Befestigung, können sie an Anlegeeinrichtungen 141, 241 angesetzt werden, die unterschiedliche Winkel zur Mittelachse des Messrohes 21, 22 aufweisen. Hierdurch ist es möglich, ein und dieselbe Messvorrichtung 11 mit unterschiedlichen Messrohren 21, 22 zu verwenden. So ergibt sich ein großer Anwendungsbereich für die Messvorrichtung 11, die im Verhältnis zu den Messrohren 21, 22 relativ teuer ist, da dort die Messelektronik beinhaltet ist.

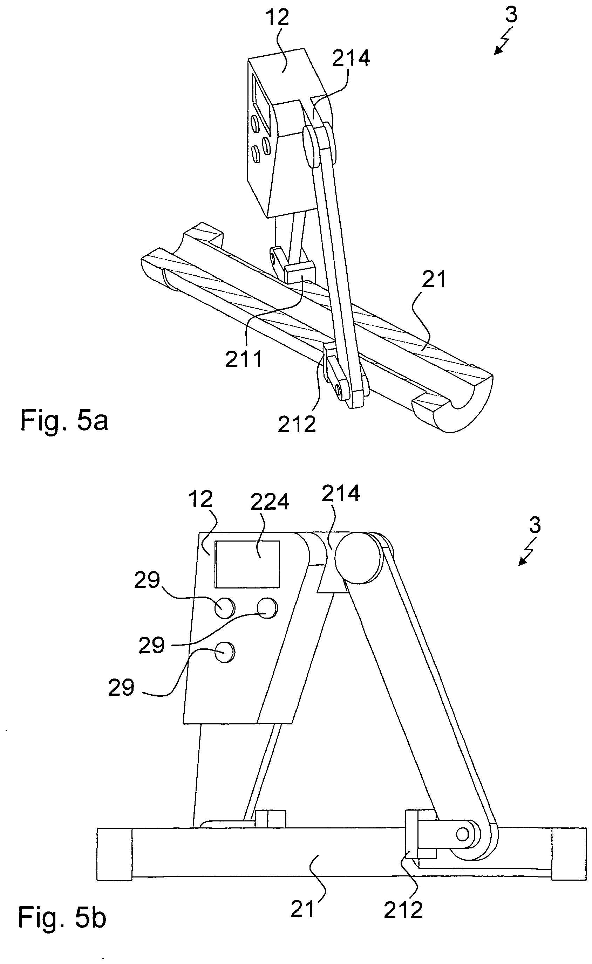

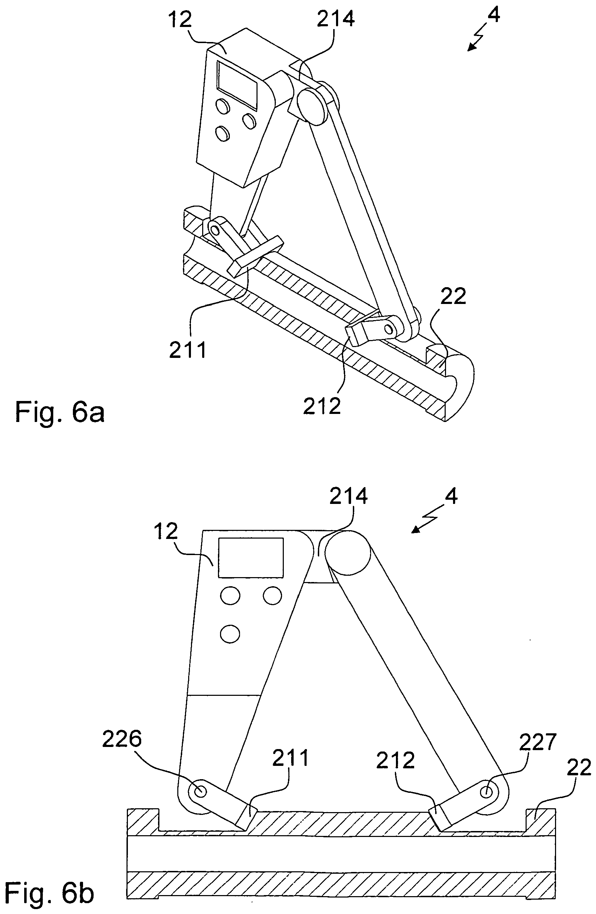

In den Figuren 5a, 5b, 6a und 6b sind zwei weitere Ausführungsformen eines erfindungsgemäßen Ultraschalldurchflussmesssystems 3 und 4 dargestellt. Dieses Messsystem 3, 4 arbeitet mit derselben Messvorrichtung 12. Die Messvorrichtung 12 kann zum einen an ein Messrohr 21 angelegt werden, wie es in Figuren 5a und 5b gezeigt ist, wie auch an ein Messrohr 22, wie es in Figuren 6a und 6b dargestellt ist.

Die Messvorrichtung 12 weist eine scherenartige Form auf. Zwei Sensorköpfe 211, 212 sind wiederum über Gelenke 226 und 227 an einem Grundkörper 214 der Messvorrichtung 12 befestigt. Auch weist die Messvorrichtung 12 wiederum eine Anzeigeneinrichtung 224 und Bedienelemente 229 auf. Der Abstand der Sensorköpfe 211, 212 kann hier beispielsweise durch den Öffnungswinkel des Grundkörpers 214 bestimmt werden. Es ist aber auch, wie bereits ausgeführt, möglich, den Abstand der Sensorköpfe 211 und 212 über die Geometrie der Anlegeeinrichtungen 141, 241 des Messrohres 21, 22 zu ermitteln. Die Geometrie kann durch die Messvorrichtung 12 beispielsweise über eine RFID-Ausleseeinrichtung ausgelesen werden, wenn auf dem Messrohr 21, 22 ein entsprechender RFID-Tag mit den Informationen hierzu vorhanden ist. Dieser RFID-Tag kann beispielsweise auch zur Ermittlung der momentanen Temperatur des Messrohres 21, 22 eingesetzt werden. Mit der Berücksichtigung der Temperatur, die geringen Einfluss auf die Ultraschallgeschwindigkeit hat, kann eine noch genauere Messung ermöglicht werden.

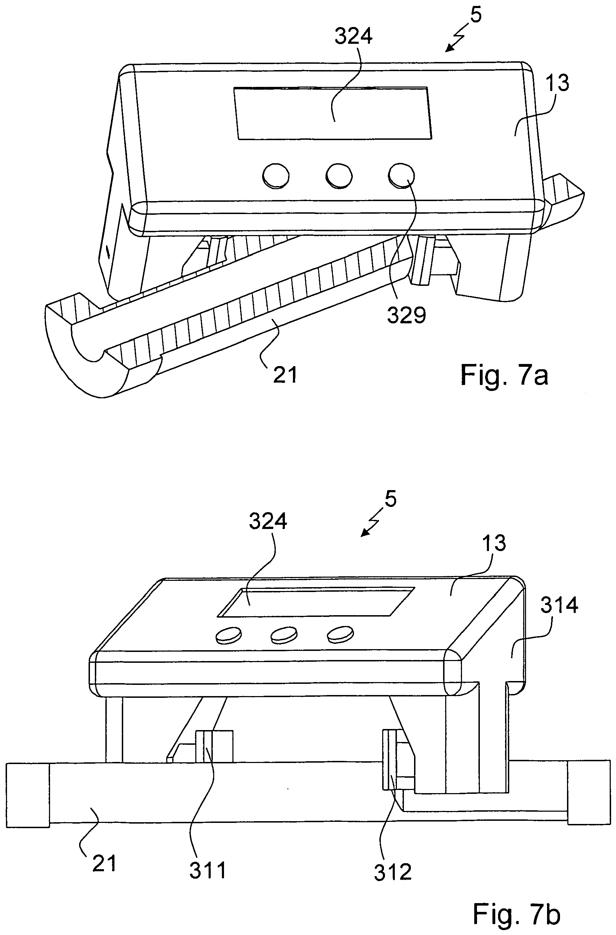

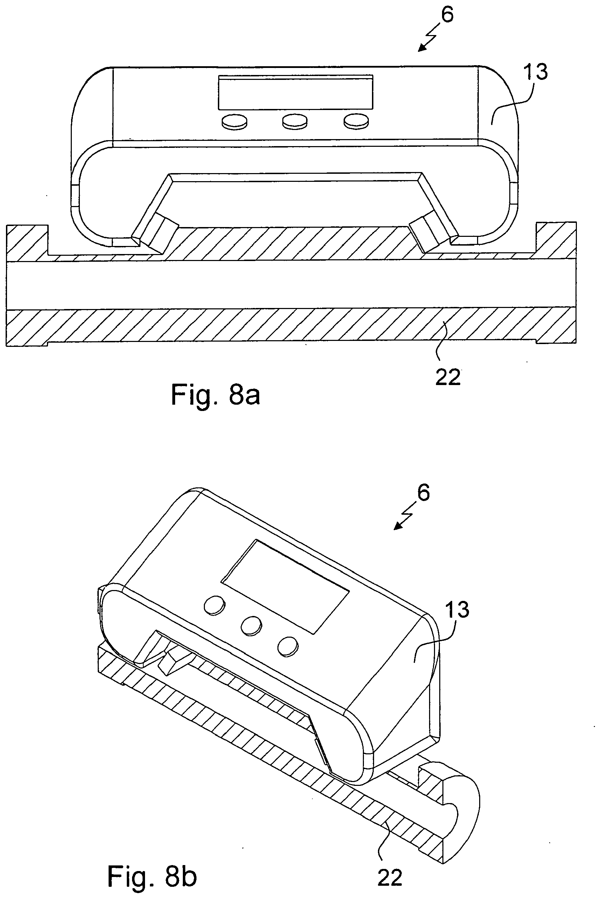

In den Figuren 7a, 7b, 8a und 8b ist sind zwei weitere Ausführungen des erfindungsgemäßen Ultraschalldurchflussmesssystems 5, 6 dargestellt. Dieses System 5, 6 arbeitet mit einer Messvorrichtung 13. In den Figuren 7a und 7b wird diese Messvorrichtung 13 mit dem Messrohr 21 verwendet und in den Figuren 8a und 8b ist eine Verwendung mit dem Messrohr 22 dargestellt.

Die Messvorrichtung 13 besteht in dieser Ausführungsform hauptsächlich aus dem Grundkörper 314, an dem eine Anzeigeeinrichtung 324 und Bedienelemente 329 vorgesehen sind. Im Gegensatz zu den zuvor beschriebenen Messvorrichtungen 11, 12 sind die Sensorköpfe 311, 312 bei der Messvorrichtung 13 zueinander im Abstand nicht variierbar. Sie sind jedoch ebenso gelenkig an dem Grundkörper 314 angebracht, so dass sie sich an unterschiedliche Geometrien der Anlageeinrichtungen 141, 241 der Messrohre 21, 22 anpassen können.

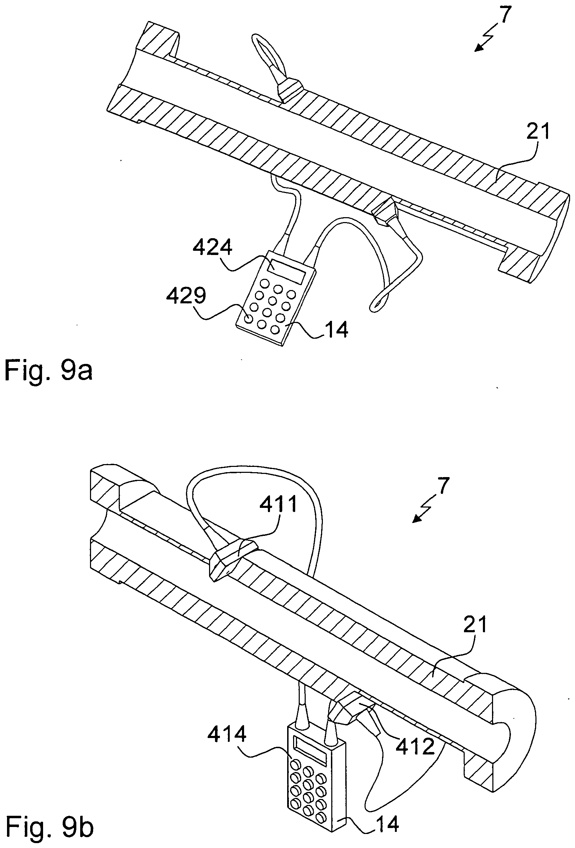

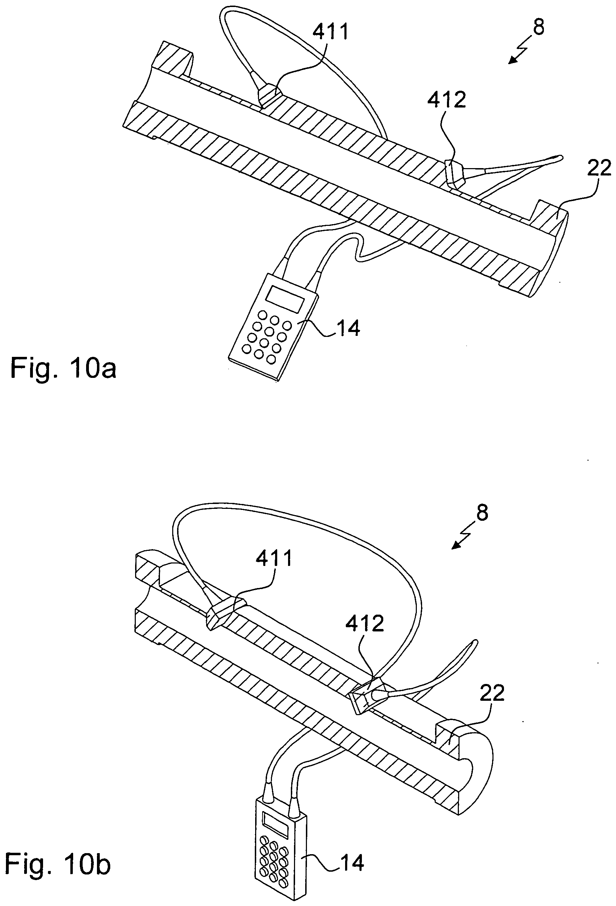

In den Figuren 9a, 9b, 10a und 10b sind zwei weitere Ausführungen eines erfindungsgemäßen Ultraschalldurchflussmesssystems 7, 8 dargestellt. Hierbei wird wiederum bei allen vier Figuren eine Messvorrichtung 14 verwendet.

Bei dieser Messvorrichtung 14 sind die Sensorköpfe 411, 412 mit dem Grundkörper 414 über Kabelverbindungen verbunden. Dies bietet eine hohe Flexibilität in der Verwendung. Allerdings kann bei dieser Messvorrichtung 14 der Abstand der Sensorköpfe 411, 412 zueinander bei der Messung nicht direkt ermittelt werden. Daher ist man bei Verwendung dieser Ausführungsform darauf angewiesen, dass ein Informationsträger auf dem Messrohr 21, 22 vorgesehen ist, der Informationen zu dem Abstand der Anlegeeinrichtung 141, 241 aufweist. Die Messvorrichtung 14 muss eine entsprechende Ausleseeinrichtung aufweisen, um den Informationsträger auszulesen, so dass Informationen zu dem Abstand der beiden Sensorköpfe 411, 412 vorhanden sind, um eine Berechnung des Durchflusses durch das Messrohr 21, 22 zu ermöglichen.

Es ist aber nicht unbedingt erforderlich, dass die Messvorrichtung 14 direkt diese Informationen aus dem Informationsträger auf einem der Messrohre 21, 22 ausliest. Es ist beispielsweise auch möglich, dass auf dem Messrohr 21, 22 der Informationsträger in Form eine Serien- oder Modellnummer vorgesehen ist. Diese Nummer kann dann über am Grundkörper 414 der Messvorrichtung 14 vorgesehene Bedienelemente 429 eingegeben werden. Mittels der eingegebenen Seriennummer und einer im Speicher des Grundkörpers 414 vorgesehenen Datenbank, können dann die entsprechenden notwendigen Informationen zu dem Messrohr 21, 22 ermittelt werden, so dass sie für eine Berechnung des Durchflussvolumens zur Verfügung stehen. Das berechnete Durchflussvolumen kann beispielsweise am Grundkörper 314 über eine Anzeigeeinrichtung 424 ausgegeben werden.

In einer weiteren Verallgemeinerung der Erfindung ist es auch möglich, die Sensorköpfe lediglich über eine drahtlose Verbindung mit einem Grundkörper mit der Steuerungs- und Auswerteeinrichtung zu verbinden. Dies ermöglicht noch höhere Freiheitsgrade beim Ansetzen der Sensorköpfe.

Grundsätzlich ist es bei der Erfindung wichtig, dass in den Sensorköpfen 111, 112, 211, 212, 311, 312, 411, 412 die Ultraschalltransceiver parallel zu der Sensor- oder der Auflagefläche der Sensorköpfe 111, 112, 211, 212, 311, 312, 411, 412 angeordnet sind. Nur deshalb wird erreicht, dass die Geometrie nicht von den Sensorköpfen selbst beeinflusst wird, sondern durch die Neigung der Anlageflächen oder -einrichtungen zur Mittelachse des Messrohres 21, 22. Hierdurch kann die Geometrie lediglich durch das Messrohr 21, 22 selbst vorgegeben werden. Dies hat den Vorteil, dass verschiedene Messrohre 21, 22 mit ein und derselben Messvorrichtung 11, 12, 13, 14 zusammen verwendet werden. Hierdurch ist es möglich Messrohre 21, 22 in verschiedene Einrichtungen einzubauen und diese Messrohre 21, 22 mit lediglich einer Messvorrichtung 11, 12, 13, 14 zu betreiben.

Hierdurch wird ein preiswertes und anwenderfreundliches Ultraschalldurchflussmesssystem geschaffen, bei dem eine einzige Messvorrichtung mit vielen verschiedenen, fest eingebauten Messrohren verwendet werden kann. Mit anderen Worten ist es entsprechend der Erfindung vorgesehen, definierte Messrohre an bestimmten Stellen in Fluidleitungen zu installieren, in denen es erforderlich ist, den Volumenstrom temporär zu messen. Diese Messrohre für das erfindungsgemäße Ultraschalldurchflussmesssystem können im Vergleich zu Messrohren mit festen eingebauten Ultraschallsensoren sehr preiswert hergestellt werden. Als mögliche Anwendungsgebiete sind zum Beispiel Hydraulikleitungen in Hydrauliksystemen oder Wasserleitungen möglich.

So ist es mit dem erfindungsgemäßen Ultraschalldurchflussmesssystems, welches aus einer Messvorrichtung und einem Messrohr besteht möglich, hoch genaue Messungen bei einer einfachen Handhabung des Messsystems zu erreichen.

**Patentansprüche**

1. Portables Ultraschalldurchflussmesssystem (1; 2; 3; 4; 5; 6; 7; 8) für Hydraulikleitungen in Hydrauliksystemen oder Wasserleitungen,
mit einem Messrohr (21; 22) und einer Messvorrichtung (11; 12; 13; 14), welche zwei Sensorköpfe (111, 112; 211, 212; 311, 312; 411, 412) aufweist,
wobei die Messvorrichtung (11; 12; 13; 14) zum Durchführen einer Messung an dem Messrohr (21; 22) ansetzbar und nach dem Durchführen der Messung von diesem wieder abnehmbar ist,
wobei das Messrohr (21; 22) aufweist:

   - ein längliches gerades Rohrelement (143; 243), welches einen Rohrmantel aufweist,
   - Rohrverbindungselemente (145; 245) an beiden Enden,
   - zwei Anlegeeinrichtungen (141; 241) zum Definieren von jeweils einer Anlegeposition für einen der Sensorköpfe (111, 112; 211, 212; 311, 312; 411, 412) der Messvorrichtung (11; 12; 13; 14), wobei die zwei Anlegeeinrichtungen (141; 241) einen direkten Signalpfad oder einen an einer Messrohrwandung des Messrohrs (21; 22) mindestens einmal gespiegelten Signalpfad für die Messvorrichtung (11; 12; 13; 14) definieren,
   - Positionierhilfen an den Anlegeeinrichtungen (141; 241) zum Ausbilden eines sicheren Sitzes der Sensorköpfe (111, 112; 211, 212; 311, 312; 411, 412) auf den Anlegeeinrichtungen (141; 241), wobei die Positionierhilfen komplementär zu entsprechend ausgebildeten Positioniereinrichtungen auf den Sensorköpfen (111, 112; 211, 212; 311, 312; 411, 412) ausgebildet sind, und
   - einen Informationsträger an dem Messrohr mit Informationen zu dem Messrohr (21; 22) und/oder den definierten Anlegepositionen, welcher an dem Messrohr (21; 22) befestigt ist,

   wobei

   - das Rohrelement (143; 243) eine strömungsgünstig ausgeformte Innenkontur mit einem konstanten Querschnitt aufweist,
   - die zwei Anlegeeinrichtungen (141; 241) im Rohrmantel durch ausfräsen ausgebildet sind,
   - die Anlegeeinrichtungen (141; 241) jeweils eine im Wesentlichen ebene Fläche auf dem Rohrmantel des Messrohres (21; 22) aufweisen und
   - die ebenen Flächen jeweils bezüglich der Mittelachse (146; 246) des Messrohres (21; 22) geneigt ausgelegt sind, wobei durch die beiden ebenen Flächen der beiden Anlegeeinrichtungen (141; 241) ein Signalpfad (146; 246), insbesondere als I-, V-, N- oder W-Signalpfad, für ein Ultraschallsignal definiert ist,

- wobei im Bereich der Anlegeeinrichtung (141; 241) Kopplungselemente vorgesehen sind, die ein gutes Ein- und Auskoppeln von Ultraschallsignalen in und aus dem Messrohr (21; 22) ermöglichen,

und bei der Messvorrichtung (11; 12; 13; 14)

- die zwei Sensorköpfe (111, 112; 211, 212; 311, 312; 411, 412) zueinander beweglich sind,
- wobei jeder Sensorkopf (111, 112; 211, 212; 311, 312; 411, 412) ein Sensorgehäuse mit einer daran ausgebildeten Sensorfläche (121) aufweist, und
- in jedem Sensorgehäuse ein Ultraschalltransceiver zum Aussenden und Empfangen von Ultraschallwellen durch die Sensorfläche (121) vorgesehen ist, und
- die Messvorrichtung (11; 12; 13; 14) ferner eine Steuer- und Auswerteeinrichtung zum Durchführen einer Laufzeitdifferenzmessung zum Ermitteln der Flussgeschwindigkeit eines durch das Messrohr (21; 22) strömenden Mediums aufweist,
- wobei die Ultraschalltransceiver im Betrieb aufeinander ausgerichtet sind, so dass sie den direkten Signalpfad oder den an der Messrohrwandung des Messrohrs (21; 22) mindestens einmal gespiegelten Signalpfad bilden, und wobei jeder Ultraschalltransceiver im Sensorkopf (111, 112; 211, 212; 311, 312; 411, 412) im Sensorgehäuse angeordnet und im Wesentlichen parallel zur Sensorfläche (121) angeordnet ist und
- wobei die Sensorflächen (121) zum An- oder Auflegen an/auf die Außenseite des Messrohrs (21; 22) vorgesehen sind,
- wobei eine Ausleseeinrichtung zum automatischen oder semiautomatischen Auslesen des Informationsträgers, vorgesehen ist und
- wobei die Steuer- und Auswerteeinrichtung zum Ermitteln der Flussgeschwindigkeit des durch das Messrohr (21; 22) strömenden Mediums so ausgebildet ist, dass sie zumindest einen Teil der ausgelesenen Informationen heranzieht.

2. Portables Ultraschalldurchflussmesssystem nach Anspruch 1,
**dadurch gekennzeichnet,**
**dass** der Informationsträger als RFID-Tag oder elektronischer Speicherbaustein ausgeführt ist und
**dass** der Informationsträger Informationen zu dem Rohrmaterial, der Positionierung der Anlegeeinrichtungen (141; 241) zueinander, dem Winkel der Anlegeeinrichtungen (141; 241) zur Mittelachse (146; 246) des Messrohres (21; 22), der Temperatur des Messrohres (21; 22), der Seriennummer des Messrohres (21; 22) und/oder dem definierten Signalpfad (147; 247) aufweist.

3. Portables Ultraschalldurchflussmesssystem nach Anspruch 1 oder 2,
**dadurch gekennzeichnet,**
**dass** die Positionierhilfen an den Anlegeeinrichtungen (141; 241) zum Ausbilden eines sicheren Sitzes von den Sensorköpfen (111, 112; 211, 212; 311, 312; 411, 412) auf den Anlegeeinrichtungen (141; 241) zum Ausbilden einer temporären kraft- und/oder formflüssigen Verbindung vorgesehen sind.

4. Portables Ultraschalldurchflussmesssystem (1; 2; 3; 4; 5; 6; 7; 8) nach einem der vorherigen Ansprüche,
**dadurch gekennzeichnet,**
**dass** bei der Messvorrichtung ein Grundkörper (114; 214; 314; 414) vorgesehen ist und
**dass** die Sensorköpfe (111, 112; 211, 212; 311, 312; 411, 412) an diesem insbesondere flexibel befestigt sind.

5. Portables Ultraschalldurchflussmesssystem (1; 2; 3; 4; 5; 6; 7; 8) nach Anspruch 4,
**dadurch gekennzeichnet,**
**dass** der Grundkörper (114; 214; 314; 414) scheren-, zangen-, zwingen- oder schraubzwingenartig ausgebildet ist, wobei an seinen Endbereichen jeweils ein Sensorkopf (111, 112; 211, 212; 311, 312; 411, 412) vorgesehen ist.

6. Portables Ultraschalldurchflussmesssystem (1; 2; 3; 4; 5; 6; 7; 8) nach einem der Ansprüche 4 oder 5,
**dadurch gekennzeichnet,**
**dass** die Sensorköpfe (111, 112; 211, 212; 311, 312; 411, 412) schwenkbar am Grundkörper (114; 214; 314; 414) gelagert sind.

7. Portables Ultraschalldurchflussmesssystem (1; 2; 3; 4; 5; 6; 7; 8) nach einem der Ansprüche 4 bis 6,
**dadurch gekennzeichnet,**
**dass** der Abstand der Sensorköpfe (111, 112; 211, 212; 311, 312; 411, 412) zueinander veränderbar ist und
**dass** der Grundkörper (114; 214; 314; 414) Mittel zum Ermitteln des Abstandes aufweist.

8. Portables Ultraschalldurchflussmesssystem (1; 2; 3; 4; 5; 6; 7; 8) nach einem der Ansprüche 4 bis 7,
**dadurch gekennzeichnet,**
**dass** der Grundkörper (114; 214; 314; 414) eine Arretiereinrichtung zum Feststellen des Abstandes der Sensorköpfe (111, 112; 211, 212; 311, 312; 411, 412) zueinander aufweist.

**Claims**

1. A portable ultrasonic flow measuring system (1; 2; 3; 4; 5; 6; 7; 8) for hydraulic conducts in hydraulic systems or water conducts,
having a measuring tube (21; 22) and a measuring device (11; 12; 13; 14), which has two sensor heads (111, 112; 211, 212; 311, 312; 411, 412),
wherein the measuring device (11; 12; 13; 14) can be connected to the measuring tube (21; 22) for executing a measure and after executing the measure it can be taken off again from this,
wherein the measuring tube (21; 22) has:

   - a long, straight tubular element (143; 243) which has a tubular shell,
   - tube-connecting elements (145; 245) at both ends,
   - two contact devices (141; 241) for the purpose of defining at each case a contact position for one of the sensor heads (111, 112; 211, 212; 311, 312; 411, 412) of the measuring device (11; 12; 13; 14), wherein said two contact devices (141; 241) define, for the measuring device (11; 12; 13; 14), a direct signal path or a signal path being reflected at least one time on a measuring tube wall of said measuring tube (21; 22),
   - positioning aids in the region of said contact devices (141; 241) for the purpose of forming a secure seating of said sensor heads (111, 112; 211, 212; 311, 312; 411, 412) on said contact devices (141; 241), wherein said positioning aids are designed complementary to the correspondent designed positioning devices on said sensor heads (111, 112; 211, 212; 311, 312; 411, 412), and
   - an information carrier at said measuring tube containing information concerning said measuring tube (21; 22) and/or said specified contact positions, and said information carrier is fixed on said measuring tube (21; 22),

   wherein

   - the tube element (143; 243) has an aerodynamically formed inner contour with a constant cross section,
   - said two contact devices (141; 241) in the tube shell are designed by milling out,
   - said contact devices (141; 241) each has a substantially plane surface on said tubular shell of the measuring tube (21; 22), and
   - said plane surfaces are designed each inclined in relation to said center axis (146; 246) of said measuring tube (21; 22) wherein a signal path (146; 246) is defined, more particularly as an I-shape, V-shaped, N-shaped, or W-shaped signal path, for an ultrasonic signal by said two plane surfaces of said two contact devices (141; 241),
   - wherein coupling elements are provided in the region of said contact device (141; 241), which provide satisfactory coupling in and out of ultrasonic signals into and out of said measuring tube (21; 22),

   and at the measuring device (11; 12; 13; 14)

   - said two sensor heads (111, 112; 211, 212; 311, 312; 411, 412) are movable relatively to each other,
   - wherein each sensor head (111, 112; 211, 212; 311, 312; 411, 412) comprises a sensor housing having a sensing surface (121) formed thereon, and
   - an ultrasonic transceiver for transmitting and receiving ultrasonic waves via the sensing surface (121) is provided in each sensor housing, and
   - said measuring device (11; 12; 13; 14) comprising farther a control and evaluation unit for carrying out a measurement of a transit time difference for ascertaining the velocity of flow of a medium flowing through said measuring tube (21; 22),
   - wherein said ultrasonic transceivers are, under operating conditions, aligned to each other such that they form the direct signal path or the signal path being reflected at least one time at said measuring tube wall of said measuring tube (21; 22), and wherein each ultrasonic transceiver in the sensor head (111, 112; 211, 212; 311, 312; 411, 412) is disposed in said sensor housing and is substantially disposed parallel to said sensing surface (121), and
   - wherein said sensing surfaces (121) are provided for disposing against or on the outer side of said measuring tube (21; 22),

- wherein a readout device is provided for automatically or semi-automatically reading out of said information carrier, and
- wherein said control and evaluation unit for ascertaining the velocity of flow of the medium flowing through said measuring tube (21; 22) is designed in such a way that it takes in consideration at least a part of said read out information.

2. The portable ultrasonic flow measuring system as defined in claim 1,
**characterized in that**
said information carrier is designed as an RFID tag or an electronic memory module, and
that said information carrier comprises information concerning the material of said tube, the position of said contact devices (141; 241) in relation to each other, the angle of said contact devices (141; 241) in relation to said center axis (146; 246) of said measuring tube (21; 22), the temperature of said measuring tube (21; 22), the serial number of said measuring tube (21; 22), and/or the specified signal path (147; 247).

3. The portable ultrasonic flow measuring system as defined in claim 1 or 2,
**characterized in that**
the positioning aids at said contact devices (141; 241) for forming a secure seating of said sensor heads (111, 112; 211, 212; 311, 312; 411, 412) on said contact devices (141; 241) are provided for forming a temporary force and/or form-fit connection.

4. The portable ultrasonic flow measuring system (1; 2; 3; 4; 5; 6; 7; 8) as defined in one of the previously claims,
**characterized in that**
a base body (114; 214; 314; 414) is provided at said measuring device, and
that the sensor heads (111, 112; 211, 212; 311, 312; 411, 412) are in particular flexibly attached thereto.

5. The portable ultrasonic flow measuring system (1; 2; 3; 4; 5; 6; 7; 8) as defined in claim 4,
**characterized in that**
said base body (114; 214; 314; 414) is designed scissor-like, forceps-like, clamplike, or vise-like wherein a sensor head (111, 112; 211, 212; 311, 312; 411, 412) each being provided at its end regions.

6. The portable ultrasonic flow measuring system (1; 2; 3; 4; 5; 6; 7; 8) as defined in one of claims 4 or 5,
**characterized in that**
said sensor heads (111, 112; 211, 212; 311, 312; 411, 412) are pivotally mounted on said base body (114; 214; 314; 414).

7. The portable ultrasonic flow measuring system (1; 2; 3; 4; 5; 6; 7; 8) as defined in one of claims 4 to 6,
**characterized in that**
the distance of said sensor heads (111, 112; 211, 212; 311, 312; 411, 412) from each other is variable and said base body (114; 214; 314; 414) comprises means for ascertaining said distance.

8. The portable ultrasonic flow measuring system (1; 2; 3; 4; 5; 6; 7; 8) as defined in one of claims 4 to 7,
**characterized in that**
said base body (114; 214; 314; 414) comprises a locking element for setting the distance of said sensor heads (111, 112; 211, 212; 311, 312; 411, 412) to each other.

**Revendications**

1. Système de mesure du débit à ultrasons portable (1 ; 2 ; 3 ; 4 ; 5 ; 6 ; 7 ; 8) pour des conduites hydrauliques dans des systèmes hydrauliques ou des conduites d'eau,
avec un tube de mesure (21 ; 22) et un dispositif de mesure (11 ; 12 ; 13 ; 14), lequel présente deux têtes de capteur (111, 112 ; 211, 212 ; 311, 312 ; 411, 412),
dans lequel le dispositif de mesure (11 ; 12 ; 13 ; 14) peut être appliqué au niveau du tube de mesure (21 ; 22) pour la réalisation d'une mesure et à nouveau être retiré de celui-ci après la réalisation de la mesure,
dans lequel le tube de mesure (21 ; 22) présente :

- un élément de tube droit allongé (143 ; 243), lequel présente une enveloppe de tube,
- des éléments de raccordement de tube (145 ; 245) aux deux extrémités,

- deux dispositifs d'application (141 ; 241) pour la définition de respectivement une position d'application pour une des têtes de capteur (111, 112 ; 211, 212 ; 311, 312 ; 411, 412) du dispositif de mesure (11 ; 12 ; 13 ; 14), dans lequel les deux dispositifs d'application (141 ; 241) définissent pour le dispositif de mesure (11 ; 12 ; 13 ; 14) un chemin de signal direct ou un chemin de signal réfléchi au moins une fois au niveau d'une paroi de tube de mesure du tube de mesure (21 ; 22),

- des auxiliaires de positionnement au niveau des dispositifs d'application (141 ; 241) pour la réalisation d'une bonne fixation des têtes de capteur (111, 112 ; 211, 212 ; 311, 312 ; 411, 412) sur les dispositifs d'application (141 ; 241), dans lequel les auxiliaires de positionnement sont réalisés de manière complémentaire à des dispositifs de positionnement réalisés de manière correspondante sur les têtes de capteur (111, 112 ; 211, 212 ; 311, 312 ; 411, 412), et

- un support d'informations au niveau du tube de mesure avec des informations relatives au tube de mesure (21 ; 22) et/ou aux positions d'application définies, lequel est fixé au tube de mesure (21 ; 22),

dans lequel

- l'élément de tube (143 ; 243) présente un contour intérieur formé de manière à favoriser l'écoulement avec une section transversale constante,

- les deux dispositifs d'application (141 ; 241) sont réalisés dans l'enveloppe de tube par fraisage,

- les dispositifs d'application (141 ; 241) présentent respectivement une surface sensiblement plane sur l'enveloppe de tube du tube de mesure (21 ; 22) et

- les surfaces planes sont conçues de manière inclinée respectivement par rapport à l'axe médian (146 ; 246) du tube de mesure (21 ; 22), dans lequel un chemin de signal (146 ; 246) pour un signal ultrasonore, en particulier un chemin de signal en I, V, N ou W, est défini par les deux surfaces planes des deux dispositifs d'application (141 ; 241),

- dans lequel des éléments de couplage sont prévus dans la zone du dispositif d'application (141 ; 241), qui permettent un bon couplage et découplage des signaux ultrasonores dans et depuis le tube de mesure (21 ; 22),

et dans le dispositif de mesure (11 ; 12 ; 13 ; 14)

- les deux têtes de capteur (111, 112 ; 211, 212 ; 311, 312 ; 411, 412) sont mobiles l'une par rapport à l'autre,

- dans lequel chaque tête de capteur (111, 112 ; 211, 212 ; 311, 312 ; 411, 412) présente un boîtier de capteur avec une surface de capteur (121) réalisée au niveau de celui-ci, et

- un émetteur-récepteur à ultrasons pour l'émission et la réception d'ondes ultrasonores à travers la surface de capteur (121) est prévu dans chaque boîtier de capteur, et

- le dispositif de mesure (11 ; 12 ; 13; 14) présente en outre un dispositif de commande et d'évaluation pour la réalisation d'une mesure de différence de temps de parcours pour la détermination de la vitesse d'écoulement d'un milieu s'écoulant à travers le tube de mesure (21 ; 22),

- dans lequel les émetteurs-récepteurs à ultrasons en fonctionnement sont alignés l'un par rapport à l'autre, si bien qu'ils forment le chemin de signal direct ou le chemin de signal réfléchi au moins une fois au niveau de la paroi de tube de mesure du tube de mesure (21 ; 22), et dans lequel chaque émetteur-récepteur à ultrasons est agencé dans la tête de capteur (111, 112 ; 211, 212 ; 311, 312 ; 411, 412) dans le boîtier de capteur et est agencé sensiblement parallèlement à la surface de capteur (121) et

- dans lequel les surfaces de capteur (121) sont prévues pour être appliquées ou appuyées contre le côté extérieur du tube de mesure (21 ; 22),

- dans lequel un dispositif de lecture est prévu pour la lecture automatique ou semi-automatique du support d'informations et

- dans lequel le dispositif de commande et d'évaluation est réalisé pour la détermination de la vitesse d'écoulement du milieu s'écoulant à travers le tube de mesure (21 ; 22) de telle sorte qu'il utilise au moins une partie des informations lues.

2. Système de mesure du débit à ultrasons portable selon la revendication 1,
   **caractérisé en ce**
   **que** le support d'informations est réalisé en tant qu'étiquette RFID ou de module de mémoire électronique et
   **que** le support d'informations présente des informations relatives au matériau de tube, au positionnement des dispositifs d'application (141 ; 241) l'un par rapport à l'autre, à l'angle des dispositifs d'application (141 ; 241) par rapport à l'axe médian (146 ; 246) du tube de mesure (21 ; 22), à la température du tube de mesure (21 ; 22), au numéro de série du tube de mesure (21 ; 22) et/ou au chemin de signal défini (147 ; 247).

**3.** Système de mesure du débit à ultrasons portable selon la revendication 1 ou 2,
**caractérisé en ce**
**que** les auxiliaires de positionnement au niveau des dispositifs d'application (141 ; 241) sont prévus pour la réalisation d'une bonne fixation des têtes de capteur (111, 112; 211, 212; 311, 312; 411, 412) sur les dispositifs d'application (141 ; 241) pour la réalisation d'un raccordement temporaire par force et/ou par complémentarité.

**4.** Système de mesure du débit à ultrasons portable (1 ; 2 ; 3 ; 4 ; 5 ; 6 ; 7 ; 8) selon l'une quelconque des revendications précédentes,
**caractérisé en ce**
**qu'**un corps de base (114 ; 214 ; 314 ; 414) est prévu pour le dispositif de mesure et
**que** les têtes de capteur (111, 112 ; 211, 212 ; 311, 312 ; 411, 412) sont fixées sur celui-ci de manière particulièrement flexible.

**5.** Système de mesure du débit à ultrasons portable (1 ; 2 ; 3 ; 4 ; 5 ; 6 ; 7 ; 8) selon la revendication 4,
**caractérisé en ce**
**que** le corps de base (114 ; 214 ; 314 ; 414) est réalisé en forme de ciseaux, de pince, de serre-joint ou de serre-joint à vis, dans lequel respectivement une tête de capteur (111, 112 ; 211, 212 ; 311, 312 ; 411, 412) est prévue à ses zones d'extrémité.

**6.** Système de mesure du débit à ultrasons portable (1 ; 2 ; 3 ; 4 ; 5 ; 6 ; 7 ; 8) selon l'une quelconque des revendications 4 ou 5,
**caractérisé en ce**
**que** les têtes de capteur (111, 112 ; 211, 212 ; 311, 312 ; 411, 412) sont logées de manière pivotante au niveau du corps de base (114 ; 214 ; 314 ; 414).

**7.** Système de mesure du débit à ultrasons portable (1 ; 2 ; 3 ; 4 ; 5 ; 6 ; 7 ; 8) selon l'une quelconque des revendications 4 à 6,
**caractérisé en ce**
**que** la distance des têtes de capteur (111, 112 ; 211, 212 ; 311, 312 ; 411, 412) l'une par rapport à l'autre peut être modifiée et
**que** le corps de base (114 ; 214 ; 314 ; 414) présente des moyens de détermination de la distance.

**8.** Système de mesure du débit à ultrasons portable (1 ; 2 ; 3 ; 4 ; 5 ; 6 ; 7 ; 8) selon l'une quelconque des revendications 4 à 7,
**caractérisé en ce**
**que** le corps de base (114 ; 214 ; 314 ; 414) présente un dispositif de blocage pour la constatation de la distance des têtes de capteur (111, 112; 211, 212; 311, 312 ; 411, 412) l'une par rapport à l'autre.

Fig. 1

Fig. 2

Fig. 3a

Fig. 3b

Fig. 4a

Fig. 4b

12

214

3

21

211

212

Fig. 5a

12   224   214

3

29

29

29

214

21

212

Fig. 5b

Fig. 6a

Fig. 6b

Fig. 7a

Fig. 7b

Fig. 8a

Fig. 8b

Fig. 9a

Fig. 9b

Fig. 10a

Fig. 10b

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008033701 A1
- EP 1413858 A1
- JP S60259913 A
- US 20080236297 A1
- WO 2009071960 A1
- DE 102006036720 A1